# EUROPÄISCHE PATENTANMELDUNG

(11) **EP 2 848 508 A1**
(43) Veröffentlichungstag der Anmeldung: **18.03.2015**
(21) Anmeldenummer: 14184558.6
(22) Anmeldetag: 12.09.2014
(51) Int. Cl.: B62K 21/00, B62K 21/06, B62K 21/10

(54) **Einrichtung zum Begrenzen des maximalen Lenkeinschlags an einem Fahrrad**

(30) Priorität: 12.09.2013 DE 102013016536
(71) Anmelder: Merida & Centurion Germany GmbH, 71106 Magstadt (DE)
(72) Erfinder: Schwenk, Daniel, 72280 Dornstetten (DE); Ilagan, Reynaldo, 70180 Stuttgart (DE)
(74) Vertreter: Wallinger, Michael

(57) **Zusammenfassung**

Eine Einrichtung zum Begrenzen des Lenkeinschlagwinkels einer Lenkeinrichtung zwischen einer ersten und einer zweiten Endposition für ein Fahrrad mit zwei oder drei Rädern weist eine Radführungseinrichtung und eine Fahrzeug-Rahmeneinrichtung auf. Diese Radführungseinrichtung ist um eine Lenkachse drehbar in einem Steuerrohr dieser Fahrzeug-Rahmeneinrichtung gelagert. An der Radführungseinrichtung ist eine Lenkanschlagseinrichtung (5) mit einer ersten (3c1) und einer zweiten Lenkanschlagsfläche angeordnet. An der Fahrzeug-Rahmeneinrichtung ist eine Anschlags-Gegeneinrichtung (1) mit einer ersten (2c1) und einer zweiten Anschlags-Gegenfläche angeordnet. In dieser ersten Endposition kontaktiert diese erste Lenkanschlagsfläche (3c1) diese erste Anschlags-Gegenfläche (2c1) und in dieser zweiten Endposition kontaktiert diese zweite Lenkanschlagsfläche diese zweite Anschlags-Gegenfläche. Weiter sind diese erste (3c1) und diese zweite Lenkanschlagsfläche radial und axial wenigstens teilweise innerhalb dieses Steuerrohres angeordnet.

## Beschreibung

Hiermit wird der gesamte Inhalt der Prioritätsanmeldung DE 10 2013 016 536.9 durch Bezugnahme Bestandteil der vorliegenden Anmeldung.

Die vorliegende Erfindung betrifft eine Einrichtung zum Begrenzen des maximalen Lenkeinschlags an einem Fahrrad mit einer einspurigen Lenkeinrichtung, insbesondere ein Fahrrad mit zwei oder drei Laufrädern. Die Erfindung wird im Zusammenhang mit einem zweirädrigen Fahrrad beschrieben, dies soll jedoch nicht als eine Beschränkung verstanden werden.

Ein Fahrrad weist einen Fahrradrahmen auf, welcher dazu vorgesehen ist, wenigstens ein ungelenktes Laufrad mit einem gelenkten Laufrad zu verbinden. Das gelenkte Laufrad wird dabei mittels einer Fahrradgabel mit einer oder zwei Gabelscheiden, geführt. Die Fahrradgabel ist in einem Steuerrohr des Fahrradrahmens drehbar gelagert und mittels eines Lenkers lenkbar. Häufig weist der Fahrradrahmen eine besondere Oberflächenbehandlung wie eine Lackierung, Anodisierung oder Beschichtung auf. Bei herkömmlichen Fahrrädern ist der Lenkeinschlagswinkel nicht begrenzt, so dass theoretisch eine Drehung der Fahrradgabel gegenüber dem Fahrradrahmen um 360° möglich ist. In der Praxis ist diese "Volldrehung" nicht möglich, da die Fahrradgabel, oder Anbauten an die Fahrradgabel, wie der Lenker mit weiteren Anbauten, die Bremsen, die Schutzbleche, die Lichter, oder dergleichen, mit dem Fahrradrahmen kollidieren. Bei einer derartigen Kollision kann der Fahrradrahmen, insbesondere dessen Oberflächenbehandlung, beschädigt oder zerstört werden. Mittels einer Einrichtung zur Begrenzung des Lenkeinschlagwinkels ist eine derartige Kollision verhinderbar.

Aus dem Stand der Technik sind Einrichtungen, sogenannte Lenkanschläge, zur Begrenzung des maximalen Lenkeinschlags an Zweirädern bekannt. Die Druckschrift DE 20 2008 004 845 U1 offenbart einen geschützten Lenkanschlag, bei welchem die Funktionen des Lenkkopflagers und des Lenkanschlages an der Lagerschale eines Steuersatzes innenliegend untergebracht sind. Einigen Bauarten von Lenkanschlägen ist gemein, dass der maximal mögliche Lenkeinschlag mittels einer Einstelleinrichtung individuell einstellbar ist.

Der Erfindung liegt die Aufgabe zugrunde, gegenüber dem Stand der Technik eine Einrichtung zum Begrenzen des maximalen Lenkanschlags mit verbesserter Funktionalität anzugeben.

Das wird erfindungsgemäß durch die Lehre der unabhängigen Ansprüche erreicht. Zu bevorzugende Weiterbildungen der Erfindung sind Gegenstand der Unteransprüche.

Im Sinne der Erfindung ist unter einer Lenkeinrichtung eine Einrichtung zu verstehen, mittels welcher an einem Fahrrad eine Richtungsänderung (links/rechts) bewirkt wird. Vorzugsweise ist unter einer Radführungseinrichtung im Sinne der Erfindung eine Einrichtung zum Lenken eines Laufrades des Fahrrads zu verstehen. Dabei weist eine Lenkeinrichtung vorzugsweise eine Fahrradgabel zum Führen eines Laufrads, ein Laufrad und eine Einrichtung zum Betätigen der Lenkeinrichtung, insbesondere einen Fahrradlenker oder Lenker, auf. Vorzugsweise ist unter einer Radführungseinrichtung im Sinne der Erfindung eine Fahrradgabel mit oder ohne Federung mit einer oder zwei Gabelscheiden und unter einem Laufrad ein Fahrradlaufrad, insbesondere eine Rad-Reifen-Kombination und unter einem Fahrradlenker ist eine Einrichtung zum Betätigen der Lenkeinrichtung zu verstehen.

Im Sinne der Erfindung ist unter einer Radführungseinrichtung eine Einrichtung zu verstehen, welche die Betätigungskräfte von der Betätigungseinrichtung, insbesondere einem Fahrradlenker, auf das gelenkte Laufrad überträgt. Vorzugsweise ist unter der Radführungseinrichtung eine Fahrradgabel mit wenigstens einer, vorzugsweise mit zwei, Gabelscheiden zu verstehen. Fahrradgabeln mit nur einer Gabelscheide sind heute unter anderem von der Firma Cannondale und anderen unter der Bezeichnung "Lefty" bekannt. Weiter vorzugsweise weist die Radführungseinrichtung neben der/den Gabelscheiden ein Gabelrohr, beziehungsweise einen Gabelschaft, auf. Nachfolgend werden die Begriffe Gabelrohr und Gabelschaft äquivalent verwendet. Weiter vorzugsweise ist das Gabelrohr zur Lagerung der Radführungseinrichtung in einem Fahrradrahmen vorgesehen.

Im Sinne der Erfindung ist unter einem Fahrradrahmen eine Einrichtung zu verstehen, an welcher die Lenkeinrichtung drehbar um eine Lenkachse gelagert ist. Dabei ist an dieser Lenkeinrichtung, insbesondere an der Fahrradgabel, das erste gelenkte Laufrad aufgenommen, weiter ist an dem Fahrradrahmen wenigstens ein weiteres, insbesondere ungelenktes, Laufrad aufgenommen.

Unter einer axialen Richtung ist im Sinne der Erfindung vorzugsweise die Richtung parallel zu dieser Lenkachse zu verstehen und unter einer radialen Richtung ist vorzugsweise die Richtung orthogonal zu dieser Lenkachse zu verstehen.

Vorzugsweise ist im Sinne der Erfindung unter einem Fahrradrahmen ein Rahmen in sogenannter Diamantform oder einer anderen Rahmenbauform, zu verstehen. Vorzugsweise weist der Fahrradrahmen mehrere Rahmenrohre oder schalenartige Rahmenelemente auf. Weiter weist der Fahrradrahmen ein Steuerrohr auf.

Im Sinne der Erfindung ist unter einem Steuerrohr eine Einrichtung zu verstehen, welche dazu vorgesehen ist, diese Radführungseinrichtung drehbar aufzunehmen. Vorzugsweise ist unter einem Steuerrohr ein rohrförmiges Bauteil mit einem kreisrunden, eckigen oder die beliebig geformten Querschnitt zu verstehen, welches sich zwischen einem ersten und einem zweiten axialen Ende erstreckt. Vorzugsweise ist der Querschnitt in Richtung der axialen Streckung des Steuerrohres variabel bevorzugt veränderbar. Vorzugsweise weist dieses Steuerrohr eine Wandung auf, welche eine Lenkausnehmung radial umgibt.

Im Sinne der Erfindung ist unter der Lenkausnehmung eine Ausnehmung in diesem Steuerrohr zu verstehen, dabei ist die Lenkausnehmung teilweise oder vollständig von der radialen Wandung des Steuerrohres umgeben. Vorzugsweise ist diese Wandung einstückig mit weiteren Teilen des Fahrradrahmens ausgebildet oder verbunden. Vorzugsweise erstreckt sich die Lenkachse in axialer Richtung durch diese Lenkausnehmung, weiter vorzugsweise ist diese Lenkausnehmung im Wesentlichen, wenigstens abschnittsweise, rotationssymmetrisch zu dieser Lenkachse ausgebildet. Vorzugsweise weist die Lenkausnehmung eine zylindrische- oder vorzugsweise kegelstumpfartige Form auf.

Vorzugsweise weist das Steuerrohr an einem ersten axialen Ende einen ersten Lagersitz zur Aufnahme einer ersten Lagereinrichtung und an einem zweiten axialen Ende einen zweiten Lagersitz zur Aufnahme einer zweiten Lagereinrichtung auf. Weiter vorzugsweise ist unter einer ersten und einer zweiten Lagereinrichtung ein sogenannter Steuersatz, vorzugsweise ein semi-integrierter Steuersatz zu verstehen. Vorzugsweise weist eine Lagereinrichtung ein Wälz- oder Gleitlager auf sowie eine Lagerschale zum Befestigen des Wälzoder Gleitlagers gegenüber diesem Steuerrohr.

Im Sinne der Erfindung ist unter einer Lenkanschlagseinrichtung eine Einrichtung zur Befestigung an einer Radführungseinrichtung zu verstehen, weiter weist eine Lenkanschlagseinrichtung wenigstens eine Lenkanschlagsfläche auf. Vorzugsweise wirkt diese Lenkanschlagseinrichtung mit einer Anschlags-Gegeneinrichtung zur Begrenzung des maximal möglichen Lenkeinschlagwinkels zusammen. Unter der Lenkanschlagsfläche beziehungsweis der Gegen-Anschlagsfläche sind vorzugsweise diejenigen Flächenabschnitte zu verstehen, welche sich unmittelbar zur Begrenzung des Lenkeinschlagwinkels kontaktieren. Vorzugsweise weist die Lenkanschlagseinrichtung eine erste und eine zweite Lenkanschlagsfläche auf, weiter vorzugsweise weist die Anschlags-Gegeneinrichtung eine erste und eine zweite Anschlags-Gegenfläche auf. Vorzugsweise wirken diese erste Lenkanschlagsfläche und diese erste Anschlags-Gegenfläche, zum Begrenzen des Lenkeinschlags in einer ersten Drehrichtung, und diese zweite Lenkanschlagsfläche mit dieser zweiten Anschlags-Gegenfläche, zum Begrenzen dieses Lenkeinschlags in einer zweiten Drehrichtung, zusammen. Vorzugsweise sind diese erste Lenkanschlagsfläche und diese erste Gegen-Anschlagsfläche, insbesondere im Kontaktfall, im Wesentlichen parallel zueinander ausgerichtet, weiter vorzugsweise sind diese beiden Flächen im Wesentlichen axial, vorzugsweise parallel, zur Lenkachse ausgerichtet. Vorzugsweise sind diese zweite Lenkanschlagsfläche und diese zweite Gegen-Anschlagsfläche im Kontaktfall im Wesentlichen parallel zueinander ausgerichtet, weiter vorzugsweise sind diese beiden Flächen im Wesentlichen axial, vorzugsweise parallel, zur Lenkachse ausgerichtet. Insbesondere durch eine derartige Ausrichtung ist eine gleichmäßige Beanspruchung der Bauteile und damit eine verbesserte Funktionalität der Lenkanschlagseinrichtung erreichbar. Vorzugsweise ist wenigstens eine, bevorzugt alle, Lenkanschlagsflächen im Wesentlichen orthogonal zur Bewegungsrichtung der Radführungseinrichtung um die Lenkachse ausgerichtet. Weiter vorzugsweise ist wenigstens eine, bevorzugt alle Gegenanschlagsflächen im Wesentlichen orthogonal zur Bewegungsrichtung der Radführungseinrichtung um die Lenkachse ausgerichtet.

In eine weiter bevorzugten Ausführungsform sind die Lenkanschlagsfläche und diese Gegen-Anschlagsfläche nicht parallel zueinander, vorzugsweise schiefwinkelig zueinander angeordnet. Durch eine derartige Ausrichtung sind die Dämpfungseigenschaften der Einrichtung zum Begrenzen des Lenkeinschlagswinkels beeinflussbar und somit ist eine bessere Funktionalität dieser erreichbar.

Vorzugsweise weist diese Lenkanschlagseinrichtung eine im Wesentlichen ringförmige Einrichtung zur Befestigung an der Radführungseinrichtung auf, vorzugsweise zur Befestigung am Gabelschaft. Bevorzugt ist für diese Befestigung eine Befestigungseinrichtung, bevorzugt eine Klemmringeinrichtung, vorgesehen. Vorzugsweise ist eine Kraft zur Befestigung der Lenkanschlagseinrichtung an der Radführungseinrichtung mittels einer Schraubeinrichtung aufbringbar. Vorzugsweise ist wenigstens eine dieser Schraubeinrichtungen im Wesentlichen rechtwinkelig zu dieser Lenkachse ausgerichtet, bevorzugt im Wesentlichen in radialer Richtung zur Lenkachse, besonders bevorzugt ist wenigstens eine Schraubeinrichtung zu wenigstens einem Teil der Wandung des Steuerrohrs, welcher die Lenkausnehmung umgibt, im Wesentlichen tangential, oder parallel zu einer Tangente an diese Wandung, ausgerichtet.

Im Sinne der Erfindung ist unter einer radial und axial wenigstens teilweise innerhalb der Lenkausnehmung gelegenen ersten und zweiten Lenkanschlagsfläche zu verstehen, dass wenigstens ein Teil beider Flächen geometrisch innerhalb der Lenkausnehmung angeordnet ist.

Dadurch, dass der Lenkanschlag zumindest teilweise innerhalb der Lenkausnehmung liegt, hat dieser vorzugsweise keinen oder bevorzugt nur geringen Einfluss, insbesondere auf die Positionierung und insbesondere auch auf die Erstreckung, der Lenkausnehmung in axialer Richtung. Aus verschiedenen Gründen, insbesondere aus geometrischen Gründen, ist eine tiefe Vorbauposition, sprich eine geringe Distanz zwischen Vorbau und Steuerrohr erstrebenswert. Unter einem Vorbau ist im Sinne der Erfindung insbesondere eine Einrichtung zum Verbinden des Fahrradlenkers mit dem Gabelschaf zu verstehen, dabei kann die Kombination aus Fahrradlenker und Vorbau vorzugsweise einstückig oder bevorzugt mehrteilig ausgeführt sein. Vorzugsweise mittels eines derart geringen Abstandes zwischen dem Vorbau, welcher die Kräfte zwischen dem Fahrradlenker und der Fahrradgabel überträgt, ist eine geringe Belastung der Fahrradgabel erreichbar. Weiter vorzugsweise führt eine niedrige Vorbauposition häufig zu einer hohen Steifigkeit, insbesondere der Lenkeinrichtung. Weiter vorzugsweise ermöglicht ein derart geringer Abstand eine, insbesondere aerodynamisch, günstige Sitzposition auf dem Fahrrad.

Es hat sich darüber hinaus gezeigt, dass sich bei radial und axial außerhalb der Lenkausnehmung liegenden Lenk- /Gegen-Anschlagsflächen Partikel auf diesen absetzten können. Partikel oder Verschmutzungen auf diesen Flächen führen zu einer ungewollten Verstellung/Verringerung des maximal möglichen Lenkeinschlagwinkels. Je weiter diese Flächen innerhalb der Lenkausnehmung angeordnet sind und je besser diese damit vor Verschmutzung geschützt sind, umso geringer wird diese Gefahr und die Funktionalität der Einrichtung zum Begrenzen des Lenkeinschlagwinkels verbessert sich.

So wird der Lenkeinschlag der Lenkeinrichtung zwischen der ersten und der zweiten Endposition begrenzt und die zugrunde liegende Aufgabe gelöst.

Nachfolgend werden zu bevorzugende Weiterbildungen der Erfindung beschrieben.

In einer bevorzugten Ausführungsform sind diese erste und diese zweite Lenkanschlagsfläche radial und axial vollständig innerhalb dieser Lenkausnehmung, insbesondere innerhalb des Steuerrohrs, angeordnet. Vorzugsweise sind diese Lenkanschlagsflächen in axialer Richtung, also vorzugsweise in Richtung parallel zur Lenkachse, vollständig zwischen diesem ersten und diesem zweiten axialen Ende der Lenkausnehmung angeordnet. Bevorzugt innerhalb, also axial zwischen, diesem ersten und diesem zweiten Lagersitz. In radialer Richtung, also vorzugsweise in Richtung orthogonal zur Lenkachse, liegen diese erste und zweite Lenkanschlagsfläche zwischen der Lenkachse und der die Lenkausnehmung begrenzenden Wandung des Steuerrohrs des Fahrradrahmens. Vorzugsweise sind diese erste und zweite Lenkanschlagsfläche innerhalb des Steuerrohres angeordnet.

In einer bevorzugten Ausführungsform ist die Lenkanschlagseinrichtung vollständig innerhalb der Lenkausnehmung angeordnet. Vorzugsweise ist sowohl die Befestigungseinrichtung, also insbesondere eine Klemmringeinrichtung, in axialer Richtung zwischen diesem ersten und zweiten axialen Ende der Lenkausnehmung, insbesondere des Steuerrohrs, angeordnet. Weiter vorzugsweise ist die Anschlags-Gegeneinrichtung in axialer Richtung zwischen diesem ersten und diesem zweiten axialen Ender der Lenkausnehmung angeordnet. Vorzugsweise ist sowohl die Befestigungseinrichtung, also insbesondere die Klemmringeinrichtung, in axialer Richtung innerhalb, also axial zwischen, diesem ersten und zweiten Lagersitz angeordnet. Weiter vorzugsweise ist die Anschlags-Gegeneinrichtung in axialer Richtung innerhalb, also axial zwischen, diesem ersten und diesem zweiten Lagersitz angeordnet.

Insbesondere bei Fahrrädern im sportlichen Betrieb, insbesondere also im Rennrad- und Mountainbikebereich, ist eine tiefe Position des Lenkers aus verschiedenen Gründen vorteilhaft. Besonders vorteilhaft wirkt sich eine tiefe Position des Lenkers auf die Aerodynamik und auf die Fahrzeugbalance, insbesondere die Gewichtsverteilung und den Schwerpunkt, aus. Insbesondere bei Fahrrädern mit Laufrädern die größer als 26 Zoll sind, vorzugsweise 27,5 Zoll bevorzugt 28 Zoll oder besonders bevorzugt 29 Zoll, wird der Vorbau regelmäßig so gewählt, dass der Lenker des Fahrrades möglichst tief, angebracht ist. Dazu kann insbesondere ein Vorbau mit großem Neigungswinkel von vorzugsweise größer oder gleich 6° oder bevorzugt 17° gewählt werden, weiter vorzugsweis kann der Vorbau mit einem möglichst geringen axialen Abstand zur Lenkausnehmung an der Fahrradgabel angebracht werden. Mittels einer erfindungsgemäßen Einrichtung ist ein besonders geringer Abstand zwischen dem Vorbau und der Lenkausnehmung in axialer Richtung erreichbar und damit ist auch eine bessere Funktionalität erreichbar.

Durch eine derartige tiefe Position des Lenkers sinkt insbesondere der Schwerpunkt des Gesamtfahrzeugs, bestehend aus Fahrrad und Fahrer, und dies wirkt sich positiv auf das sogenannte Handling des Fahrzeugs, insbesondere beim Durchfahren von Kurven, aus. Weiter ist mittels einer derartigen tiefen Positionierung des Lenkers eine Veränderung der Gewichtsverteilung im Sinn eines größeren Gewichtsanteils am Vorderrad erreichbar und dies wirkt sich positiv auf die Bodenhaftung, insbesondere beim Befahren von Bergauf Passagen aus. Weiter ist mittels einer derartigen, tiefen Positionierung des Lenkers, eine Verringerung der Anströmfläche des Gesamtfahrzeugs und damit eine Verbesserung der Aerodynamik erreichbar.

Es hat sich gezeigt, dass sich nicht nur Verschmutzungen auf den Lenkanschlags-/Gegen-Anschlagsflächen absetzten können, sondern dass Verschmutzungen insbesondere viskose Medien, insbesondere Wasser und Schmierstoffe, die Befestigungswirkung der Einrichtung zur Begrenzung des Lenkeinschlagwinkels am Fahrradrahmen und an der Radführungseinrichtung mindern können. Dabei kann es vorkommen, dass die Befestigungswirkung soweit herabgesetzt wird, bis die Einrichtung zum Begrenzen des Lenkeinschlagwinkels nicht mehr planmäßig funktioniert. Ist diese Einrichtung im Wesentlichen innerhalb der Lenkausnehmung angeordnet, so ist sie gut vor Verschmutzungen geschützt und die Funktionalität der Einrichtung wird somit verbessert.

In einer bevorzugt Ausführungsform ist wenigstens ein Teil der Lenkanschlagseinrichtung kraftschlüssig an der Radführungseinrichtung befestigbar. Vorzugsweise ist der Abschnitt oder das Bauteil der Lenkanschlagseinrichtung, welches auch die Lenkanschlagsflächen aufweist, an der Radführungseinrichtung kraftschlüssig befestigbar. Vorzugsweise weist die Einrichtung zur - vorzugsweise kraftschlüssigen - Befestigung der Lenkanschlagseinrichtung eine Klemmringeinrichtung und eine Schraubeinrichtung auf. Weiter vorzugsweise kann zusätzlich oder alternativ zu der Schraubeinrichtung eine Keil-, Hebel- oder Spannkonuseinrichtung vorgesehen sein. Vorzugsweise sind die Klemmringeinrichtung und die Schraubeinrichtung dazu vorgesehen, die Lenkanschlagseinrichtung von einem ersten unbefestigten in einen zweiten befestigten Zustand zu überführen, wobei die Lenkanschlagseinrichtung in diesem zweiten befestigten Zustand, vorzugsweise drehfest, an diesem Fahrradrahmen oder der Radführungseinrichtung, vorzugsweise am Gabelschaft, befestigt ist. Weiter vorzugsweise ist der Durchmesser der Klemmringeinrichtung wenigstens abschnittsweise mittels der Schraubeinrichtung oder bevorzugt der Umfang dieser, veränderbar. Vorzugsweise ist die Schraubeinrichtung im befestigten Zustand der Lenkanschlagseinrichtung im Wesentlichen tangential oder parallel zu einer Tangente an die Oberfläche des Gabelschaftes ausgerichtet. Insbesondere durch eine kraftschlüssige Befestigung mittels einer Klemmringeinrichtung ist die Lenkanschlagseinrichtung beliebig positionierbar/einstellbar und die Funktionalität der Einrichtung wird somit verbessert.

In einer bevorzugten Ausführungsform ist die Radführungseinrichtung, insbesondere die Fahrradgabel, mittels wenigstens einer Lagereinrichtung, vorzugsweise mittels zweier Lagereinrichtungen, gegenüber dem Fahrradrahmen drehbar gelagert. Vorzugsweise ist eine Lagereinrichtung im Wesentlichen an einem ersten axialen Ende der Lenkausnehmung angeordnet, weiter vorzugsweise ist die zweite Lagereinrichtung an einem zweiten axialen Ende der Lenkausnehmung angeordnet. Vorzugsweise gehören diese erste und diese zweite Lagereinrichtung zu einen sogenannten Steuersatz.

Vorzugsweise weist wenigsten eine der beiden Lagereinrichtungen einen ersten und einen zweiten Lagerring auf. Vorzugsweise ist einer der beiden Lagerringe drehfest mit der Radführungseinrichtung, insbesondere mit dem Gabelschaft, verbindbar und der zweite Lagerring mit dem Fahrradrahmen. Vorzugsweise können die Lagerringe einstückig oder integral mit dem Bauteil ausgebildet sein, mit welchem diese drehfest verbunden sind. Weiter vorzugsweise können die Lagerringe auch mittels einer sogenannten Lagerschale mit dem Gabelschaft oder dem Fahrradrahmen verbunden sein. Vorzugsweise weist eine dieser Lagereinrichtungen die Anschlags-Gegenflächen auf. Bevorzugt sind die Anschlags-Gegenflächen an dem Teil der Lagereinrichtung angeordnet oder mit diesem verbunden, welcher drehfest mit der Radführungseinrichtung verbunden ist oder die Anschlags-Gegenflächen sind an dem Teil der Lagereinrichtung angeordnet oder mit diesem verbunden, welcher drehfest mit dem Fahrradrahmen verbunden ist. Vorzugsweise sind die Lenkanschlagsflächen am jeweils anderen Teil, insbesondere am jeweils anderen Lagerring oder an der Lagerschale der Lagereinrichtung angeordnet oder mit diesem verbunden.

Vorzugsweise findet ein Steuersatz Verwendung, bei dem wenigstens eine Lagerschale zur Aufnahme eines Lagerrings, in den Fahrradrahmen eingesetzt ist, vorzugsweise kraftschlüssig mit diesem verbunden ist, bevorzugt in diesen eingepresst ist. Weiter vorzugsweise sind zwei Lagerschalen in diesen Fahrradrahmen eingesetzt, vorzugsweise kraftschlüssig mit diesen verbunden, bevorzugt in diesen eingepresst. Diese Lagerschalen sind dazu eingerichtet jeweils einen dieser Lagerringe aufzunehmen. Vorzugsweise weist eine Lagereinrichtung jeweils ein geschlossenes und bevorzugt abgedichtetes Steuersatzlager auf. Vorzugsweise werden diese über entsprechende Konen sowie unter axialer Vorspannung jeweils mit dem im Wesentlichen starren Steuerrohr und der beweglichen Fahrradgabel kraftschlüssig verspannt. Derartige Lageranordnungen zur Lagerung der Fahrradgabel gegenüber dem Fahrradrahmen werden vorzugsweise auch als semi-integrierter Steuersatz bezeichnet. Weiter vorzugsweise weist die obere Lagerschale die Anschlags-Gegenflächen auf. Die Gegenflächen sind somit insbesondere drehfest mit dem Fahrradrahmen verbunden.

Insbesondere durch die Integration der Einrichtung zum Begrenzen des Lenkeinschlagwinkels in das Steuerrohr wird ein besonders geringer Bauraumbedarf ermöglicht, wodurch allgemein die Funktionalität verbessert wird und eine tiefe Position des Lenkers ermöglicht ist.

In einer bevorzugten Ausführungsform weist wenigstens eine Lagereinrichtung, mit welcher die Radführungseinrichtung, insbesondere die Fahrradgabel, gegenüber dem Fahrradrahmen gelagert ist, wenigstens abschnittsweise einen ersten Werkstoff auf oder besteht aus diesem ersten Werkstoff. Vorzugsweise weist eine Lagerschale wenigstens abschnittsweise diesen ersten Werkstoff auf oder besteht aus diesem. Weiter vorzugsweise weist ein Dämpfungsbauteil, welches wenigstens eine dieser Anschlags-Gegenflächen aufweist einen zweiten, von diesem ersten Werkstoff verschiedenen, Werkstoff auf oder besteht aus diesem. Vorzugsweise weist dieser zweite Werkstoffe, gegenüber diesem ersten Werkstoff, einen geringen Elastizitätsmodul auf. Vorzugsweise ist dieses Dämpfungsbauteil mit dieser Lagereinrichtung oder mit dieser Lenkanschlagseinrichtung verbunden, vorzugsweise kraftschlüssig, bevorzugt formschlüssig oder besonders bevorzugt stoffschlüssig oder ganz besonders bevorzugt mit einer Kombination aus mehreren der genannten Verbindungsarten. Insbesondere durch die Wahl unterschiedlicher Werkstoffe für unterschiedliche Teilbereiche der Lagereinrichtung, vorzugsweise der Lagerschale, der Lagerlaufbahn und des Dämpfungsbauteil, können die Werkstoffeigenschaften auf die jeweils vorliegenden Beanspruchungen abgestimmt werden. So ist insbesondere in Bereichen der Lagerschale, in welchen diese den Lagerring aufnimmt, eine hohe Festigkeit gefordert. Hier können vorzugsweise metallische oder Faserverbundwerkstoffe verwendet werden. Beim Dämpfungsbauteil ist insbesondere eine hohe innere Dämpfung gefordert. Hier können vorzugsweise sogenannte Kunststoffe verwendet werden, insbesondere hierdurch wird die Funktionalität der Einrichtung zum Begrenzen des Lenkeinschlagswinkels verbessert. Dabei entscheidet insbesondere die Dimensionierung des Dämpfungsbauteils über die maximale Größe des Lenkeinschlagwinkels.

In einer weiter bevorzugten Ausführungsform weist die Lenkanschlagseinrichtung diesen ersten und diesen zweiten Werkstoff auf oder besteht aus einem dieser oder aus diesen beiden.

In einer bevorzugten Ausführungsform weist der Werkstoff des Dämpfungsbauteils einen Elastizitätsmodul auf, welcher
- größer ist als vorzugsweise 2*10³ N/mm2, bevorzugt 3* 10³ N/mm² und besonders bevorzugt 4*10³ N/mm² und weiter ist dieser Elastizitätsmodul
- kleiner als vorzugsweise 70*10³ N/mm², bevorzugt 40*10³ N/mm² und besonders bevorzugt 10*10³ N/mm² und ganz besonders bevorzugt ist dieser Elastizitätsmodul
- im Wesentlichen etwa 5*10³ N/mm².

In einer bevorzugten Ausführungsform ist dieser zweite Werkstoff, also insbesondere der Werkstoff des Dämpfungsbauteils, aus einer Gruppe von Werkstoffen ausgewählt, welche wenigstens folgende Werkstoffe enthält:
- natürlicher oder künstlicher Kautschuk,
- Gummi,
- Acrylnitril-Butadien-Styrol-Copolymerisat (ABS-Kunststoff),
- Polypropylen (PP),
- Polyethylen (PE),
- Faserverstärkter Kunststoff
oder dergleichen.

Insbesondere durch den Einsatz von auf die Beanspruchung abgestimmter Werkstoffe wird die Funktionalität der Einrichtung zum Begrenzen des Lenkeinschlagwinkels verbessert.

In einer bevorzugten Ausführungsform ist dieses Dämpfungsbauteil vorzugsweise kraftschlüssig, bevorzugt stoffschlüssig oder besonders bevorzugt formschlüssig mit einer dieser Lagereinrichtungen verbunden. Weiter vorzugsweise ist das Dämpfungsbauteil mittels einer Kombination aus wenigstens zwei der genannten Verbindungsarten mit der Lagereinrichtung verbunden. Vorzugsweise ist das Dämpfungsbauteil mit der Lagereinrichtung verklebt, verpresst, verklemmt, verschweißt oder ist an diese angeschweißt, angegossen oder dergleichen. Weiter vorzugsweise ist das Dämpfungsbauteil einstückig oder integral mit der Lagereinrichtung ausgebildet.

In einer bevorzugten Ausführungsform sind zwei oder mehr Einrichtungen zum Begrenzen des Lenkeinschlagwinkels an einer Fahrzeug-Rahmeneinrichtung vorgesehen. Insbesondere durch mehrere Einrichtungen ist eine besonders sicheres Festlegen der Lenkeinschlagwinkels ermöglicht und damit ist eine verbesserte Funktionalität erreichbar.

In einer bevorzugten Ausführungsform ist die Anschlags-Gegeneinrichtung an der Wandung des Steuerrohres befestigt.

Weitere Vorteile, Merkmale und Anwendungsmöglichkeiten der vorliegenden Erfindung ergeben sich aus der nachfolgenden Beschreibung in Zusammenhang mit den Figuren, dabei sind die Figuren teilweise schematisiert.

Es zeigt:
- Fig.1: eine perspektivische Darstellung einer Einrichtung zum Begrenzen des Lenkeinschlags in einer ersten Einbaulage,
- Fig.2: eine perspektivische Darstellung einer Einrichtung zum Begrenzen des Lenkeinschlags in einer zweiten Einbaulage,
- Fig.3: eine Vorderansicht der Einrichtung zum Begrenzen des Lenkeinschlags,
- Fig.4: eine Teilschnittdarstellung der Einrichtung zum Begrenzen des Lenkeinschlags,
- Fig.5: eine weitere perspektivische Darstellung der Einrichtung zum Begrenzen des Lenkeinschlags,
- Fig.6: den Bereich der Fahrzeug-Rahmeneinrichtung in welchem die Radführungseinrichtung und die Einrichtung zum Begrenzen des Lenkeinschlags aufgenommen ist,
- Fig.7: eine Schnittdarstellung des Steuerrohrs einer Fahrzeug-Rahmeneinrichtung.

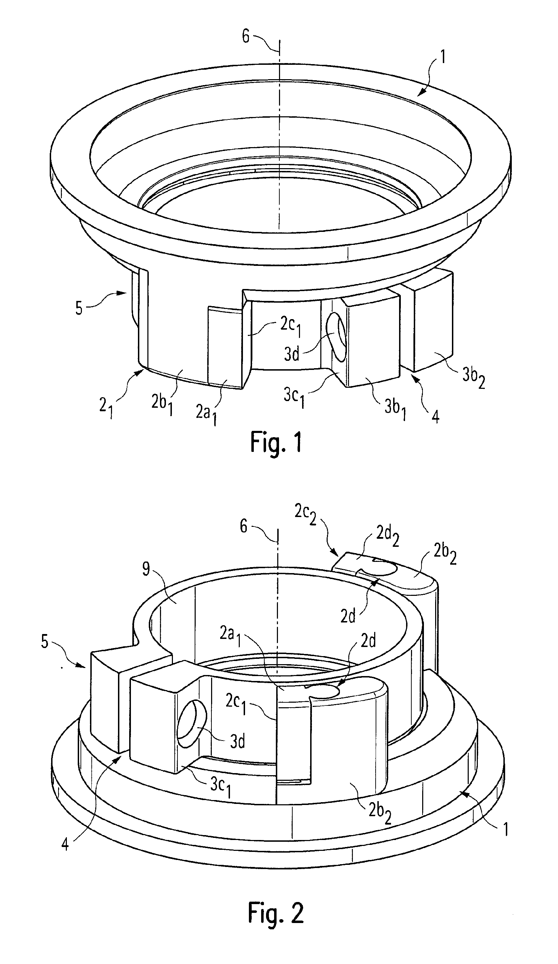

In Figur 1 ist an einer Lagerschale einer Lagereinrichtung, ein erstes und ein zweites Dämpfungsbauteil 2₁, 2₂ (nicht dargestellt) angeordnet. Damit stellt diese Lagerschale oder wenigstens ein Bereich dieser Lagerschale, die Anschlags-Gegeneinrichtung 1 dar. Die Dämpfungsbauteile 2₁, 2₂ sind jeweils gleich ausgeführt, so dass nachfolgend nur auf das erste Dämpfungsbauteil 2₁ eingegangen wird. Das erste Dämpfungsbauteil 2₁ weist einen Dämpfungsabschnitt 2a₁ und einen Halteabschnitt 2b₁ auf, der Halteabschnitt 2b₁ ist einstückig mit einem Lagerring einer Lagereinrichtung ausgebildet. Der Dämpfungsabschnitt 2a₁ ist teilweise in den Halteabschnitt 2b₁ eingesetzt und mit diesem formschlüssig verbunden und somit verliersicher aufgenommen. An einer Oberfläche des Dämpfungsabschnitts 2a₁ ist die Gegen-Anschlagsfläche 2c₁ angeordnet. Die Gegen-Anschlagsfläche 2c₁ kontaktiert in einer Endposition (nicht dargestellt) der Einrichtung zum Begrenzen des Lenkeinschlags die erste Lenkanschlagsfläche 3c₁. Dabei sind die Anschlagsfläche 3c₁ und die erste Gegen-Anschlagsfläche 2c₁ im Wesentlichen parallel zueinander angeordnet und senkrecht zur Bewegungsrichtung der Fahrradgabel um die Lenkachse ausgerichtet. Die Lenkanschlagseinrichtung 5 weist eine Klemmringeinrichtung auf. Der Umfang der Klemmringeinrichtung ist mittels einer Schraubeinrichtung (nicht dargestellt) welche in der Ausnehmung 3d aufgenommen ist und der spaltartigen Ausnehmung 4 verringerbar und so kann die Klemmringeinrichtung sicher an der Fahrradgabel (nicht dargestellt) insbesondere am Gabelschaft (nicht dargestellt) aufgenommen werden. Bei einer Lenkbewegung der Radführungseinrichtung (nicht dargestellt) gegenüber Fahrradrahmen (nicht dargestellt) bewegt sich die Lenkanschlagseinrichtung 5, welche am Gabelschaft befestigt ist, gegenüber der Anschlags-Gegeneinrichtung 1, welche an der Fahrzeug-Rahmeneinrichtung aufgenommen ist. Dabei rotiert die Lenkanschlagseinrichtung 5 um die Lenkachse 6. Die Lenkanschlagseinrichtung 5 kann soweit um die Lenkachse 6 rotieren, bis entweder die erste Lenkanschlagsfläche 3c₁ mit der ersten Gegen-Anschlagsfläche 2c₁ in Anlage kommen oder, bei einer Bewegung in die Gegenrichtung, bis die zweite Lenkanschlagsfläche (nicht dargestellt) mit der zweiten Gegen-Anschlagsfläche (nicht dargestellt) in Anlage kommt.

Figur 2 zeigt die Einrichtung zum Begrenzen des Lenkeinschlagswinkels, welche auch in Figur 1 dargestellt ist, in einer zweiten Einbaulage. Dabei ist auch in Figur 2 der Fahrradrahmen und die Fahrradgabel, wie in Figur 1, nicht dargestellt. Die Lenkanschlagseinrichtung 5 weist eine Innenfläche 9 auf, welche zur Befestigung dieser an der Fahrradgabel (nicht dargestellt) wenigstens abschnittsweise mit der Oberfläche des Gabelschaftes (nicht dargestellt) in Anlage gebracht wird. Vorliegend ist die Lenkanschlagseinrichtung 5 im Wesentlichen als eine Klemmringeinrichtung ausgestaltet. An dieser Klemmringeinrichtung ist die erste Lenkanschlagsfläche 3c₁ und eine zweite Lenkanschlagsfläche (nicht dargestellt) angeordnet, diese Lenkanschlagsflächen sind dazu vorgesehen Gegen-Anschlagsflächen 2c₁, 2c₂, welche an der Anschlags-Gegeneinrichtung 1 angeordnet sind, zu kontaktieren und damit die Lenkbewegung in jeweils eine Richtung zu begrenzen.

Von der ersten Lenkanschlagsfläche 3c₁ ausgehend erstreckt sich eine Ausnehmung 3d, in welche eine Schraubeinrichtung (nicht dargestellt) einsetzbar ist. Die Schraubeinrichtung ist dazu vorgesehen mit der spaltartigen Ausnehmung 4 zusammenzuwirken und die Lenkanschlagseinrichtung 5 am Gabelschaft (nicht dargestellt) zu befestigen. In die Halteabschnitte 2b₁, 2b₂ des Haltebauteils 2 sind Dämpfungsabschnitt 2a₁, 2a₂ eingesetzt, welche Gegen-Anschlagsfläche 2c₁, 2c₂ aufweisen. Die Halteabschnitte 2b₁, 2b₂ und die Dämpfungs-Abschnitte 2a₁, 2a₂ sind formschlüssig miteinander verbunden. Der Verbindungsbereich 2d weist eine teilweise kreisrunde Ausnehmung im Halteabschnitt 2b₁, 2b₂ auf, der Dämpfungs-Abschnitt 2a₁, 2a₂ weist eine an diese Ausnehmung angepassten Abschnitt auf (Nut-Feder-Prinzip). Bei einer Lenkbewegung bewegt sich die Lenkanschlagseinrichtung 5 mit der Fahrradgabel (nicht dargestellt) mit den Lenkanschlagsflächen 3c₁, 3c₂ um die Lenkachse 6. In der ersten Endposition (nicht dargestellt) kontaktiert die Lenkanschlagsfläche 3c₁ die Gegen-Anschlagsfläche 2c₁ beziehungsweise in der zweiten Endposition (nicht dargestellt) kontaktiert die Lenkanschlagsfläche 3c₂ die Gegen-Anschlagsfläche 2c₂. Eine weitere Bewegung in die jeweilige Drehrichtung ist dann nicht mehr möglich, da die Gegen-Anschlagsfläche 2c₁ über den Dämpfungsabschnitt 2a₁ und den Halteabschnitt 2b₁ im Wesentlichen ortsfest mit der Fahrzeug-Rahmeneinrichtung (nicht dargestellt) verbunden ist, gleiches gilt für die zweite Endposition entsprechend. Die Anschlags-Gegeneinrichtung 1 ist drehfest im Fahrradrahmen aufgenommen.

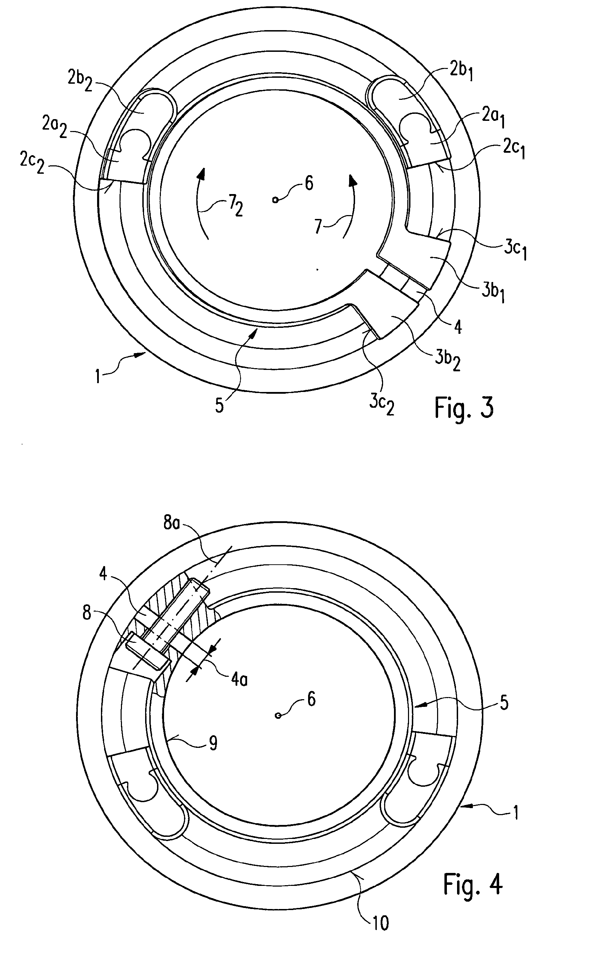

Figur 3 zeigt die Einrichtung zum Begrenzen des Lenkeinschlagwinkels in einer Draufsicht. Dabei ist die Anordnung der Gegen-Anschlagsflächen (2c₁, 2c₂) und der Lenkanschlagsflächen (3c₁, 3c₂) erkennbar. Die Lenkanschlagseinrichtung 5 rotiert bei einer Lenkbewegung um die Lenkachse 6 in die erste Richtung 7 oder in die zweite Richtung 7₂. Zum Begrenzen der Lenkbewegung in die erste Richtung 7, ist es vorgesehen, dass sich die erste Lenkanschlagsfläche 3c₁ und die erste Gegen-Anschlagsfläche 2c₁ beim Erreichen der Endposition kontaktieren. Zum Begrenzen der Lenkbewegung in die zweite Richtung 7₂ ist es vorgesehen, dass sich die zweite Lenkanschlagsfläche 2c₂ und die zweite Gegen-Anschlagsfläche 3c₂ kontaktieren. Dabei sind in die Halteabschnitte 2b₁, 2b₂ jeweils Dämpfungsabschnitte 2a₁, 2a₂ eingesetzt. Bei einer Berührung der Lenkanschlagsflächen/Gegen-Anschlagsflächen (2c/3c beziehungsweise 2c₂/3c₂) können die Dämpfungsabschnitte 2b₁, 2b₂ unter einer Kraftwirkung in Richtung der Bewegungsrichtungen 7, 7₂ elastisch deformiert werden und insbesondere durch innere Reibung ein besonders "weiches" und damit schonendes Berühren der Lenkanschlagsflächen/Gegen-Anschlagsflächen ermöglichen.

Figur 4 zeigt die aus Figur 3 bekannte Ausführungsform einer Einrichtung zum Begrenzen des Lenkeinschlagwinkels, es wird nachfolgend auf die Schraubeinrichtung 8 zur Befestigung der Lenkanschlagseinrichtung 5 an der Fahrradgabel, insbesondere am Gabelschaft, (nicht dargestellt) eingegangen. Die Fahrradgabel (nicht dargestellt) erstreckt sich wenigstens abschnittsweise in Richtung der Lenkachse 6 und weist eine Oberfläche auf, welche wenigstens abschnittsweise mit der Innenfläche 9 zusammenfällt, oder diese wenigstens kontaktiert, auf. Die Schraubeinrichtung 8 ist dabei so angeordnet, dass eine Schraubachse 8a im Wesentlichen orthogonal zur Lenkachse 6 ausgerichtete ist, vorzugsweise in einer orthogonalen Ebene zu dieser angeordnet ist und parallel zu einer Tangentialen an die Innenfläche 9. Beim Anziehen der Schraubeinrichtung 8 verringert sich das Spaltmaß 4a der Ausnehmung 4 und die Lenkanschlagseinrichtung 5 ist so mit der Radführungseinrichtung (nicht dargestellt) mittels Kraftschluss drehfest verbindbar. Die Anschlags-Gegeneinrichtung 1 ist im Steuerrohr des Fahrradrahmens (nicht dargestellt) aufnehmbar, dazu weist die Anschlags-Gegeneinrichtung 1 eine Außenfläche 10 auf.

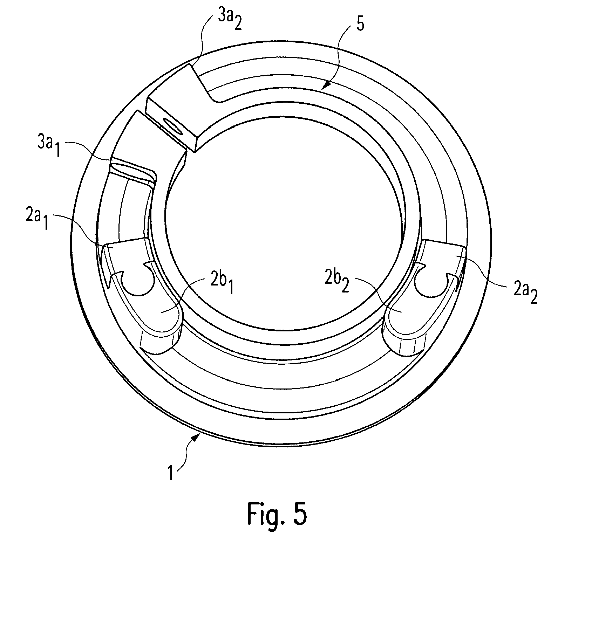

Figur 5 zeigt eine perspektivische Darstellung der Einrichtung zum Begrenzen des Lenkeinschlagwinkels. Die Dämpfungsabschnitte 2a₁, 2a₂ sind in den Halteabschnitten 2b₁, 2b₂ aufgenommen und bilden die Dämpfungsbauteile 2, dabei sind die Dämpfungsbauteile 2 über die Halteabschnitte 2b₁, 2b₂ einstückig mit einem Bereich der Lagereinrichtung des Steuersatzes verbunden und sind so Bestandteil der Anschlags-Gegeneinrichtung 1. Die Lenkanschlagsflächen 3a₁, 3a₂ sind an der Lenkanschlagseinrichtung 5 angeordnet, welche eine Klemmringeinrichtung zur Befestigung am Gabelschaft der Fahrradgabel (nicht dargestellt) aufweist. Die Lenkanschlagseinrichtung 5 ist drehfest mit der Fahrradgabel (nicht dargestellt) verbunden. Bei einer Lenkbewegung der Fahrradgabel rotiert die Lenkanschlagseinrichtung 5 um die Lenkachse 6, wohingegen die Anschlags-Gegeneinrichtung 1 sich nicht bewegt, da diese drehfest mit dem Fahrradrahmen (nicht dargestellt) verbunden ist.

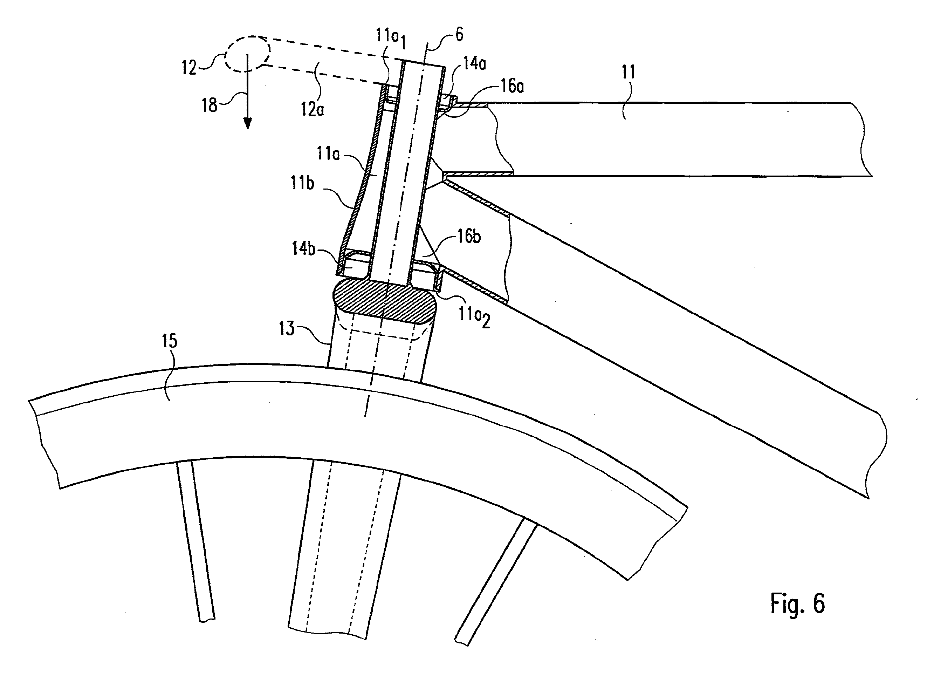

Figur 6 zeigt mögliche Einbauorte für eine Einrichtung zum Begrenzen des Lenkeinschlagswinkels, zur Veranschaulichung dieser Positionen ist ein Teilschnitt eines Fahrrades dargestellt. Dieses Fahrrad weist einen Fahrradrahmen 11 auf. Der Fahrradrahmen 11 weist eine Lenkausnehmung 11a auf, welche in dem Steuerrohr 11 b des Fahrradrahmens 11 angeordnet ist. Die Lenkausnehmung 11a erstreckt sich in axialer Richtung zur Lenkachse 6 zwischen einem ersten axialen Ende 11a₁ und einem zweiten axialen Ende 11a₂. Vorzugsweise im Wesentlichen an diesen beiden Enden (11a₁, 11a₂) sind eine erste Lagereinrichtung 14a und eine zweite Lagereinrichtung 14b eines Steuersatzes angeordnet. Die beiden Lagereinrichtungen 14a, 14b gehören also zu einem sogenannten Steuersatz und dienen dazu die Fahrradgabel 13 gegenüber dem Fahrradrahmen 11, um die Lenkachse 6, drehbar zu lagern. Lenkkräfte werden mittels des Fahrradlenkers 12 über den Vorbau 12a (jeweils gestrichelt dargestellt) auf die Fahrradgabel 13 aufgebracht. Aus verschiedenen Gründen ist es vorteilhaft, insbesondere bei Fahrrädern im sportlichen Betrieb, den Fahrradlenker 12 niedrig anzubringen und im Sinne der Erfindung in Richtung 18 zu verschieben. Der Fahrradlenker 12 kann eine im Wesentlichen gerade (insbesondere ein Mountainbike Lenker) oder gebogene Stange (insbesondere ein Rennradlenker) sein. Durch eine Drehung der Fahrradgabel 13 wird auch das gelenkte Laufrad 15 um die Lenkachse 6 verdreht. Die Einrichtung zur Begrenzung des Lenkeinschlagswinkels kann im Wesentlichen an den mit 16a und 16b gekennzeichneten Positionen innerhalb des Steuerrohres 11b angeordnet werden, wobei auch Positionen zwischen den Positionen 16a und 16b möglich sind.

Wenn eine beliebig weite Drehung der Fahrradgabel 13 gegenüber dem Fahrradrahmen 11 um die Lenkachse 6 ermöglicht ist, wenn also keine Einrichtung zur Begrenzung des Lenkeinschlagswinkels vorgesehen ist, so können Kollisionen zwischen der Fahrradgabel 13 oder Anbauten an dieser wie Lenker mit weiteren Anbauten, Bremsen, Lichtanlage, Schutzblechen oder dergleichen, mit dem Fahrradrahmen 11 auftreten und zu einer Beschädigung des Fahrradrahmens 11 führen. Derartige Beschädigungen sind mit einer erfindungsgemäßen Einrichtung zum Begrenzen des Lenkeinschlagswinkels verhinderbar.

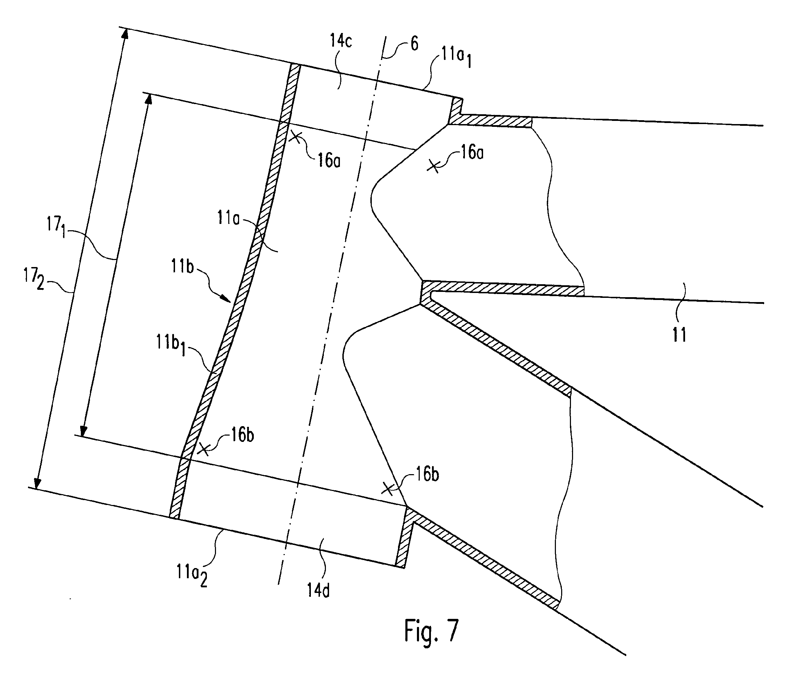

Figur 7 zeigt eine Schnittdarstellung eines Steuerrohrs 11 b welches am Fahrradrahmen 11 angeordnet ist. In dem Steuerrohr 11 b ist die Lenkausnehmung 11a angeordnet, die Lenkausnehmung 11a ist von der Wandung 11b₁ des Steuerrohrs radial umgeben. Die Lenkausnehmung 11a erstreckt sich in axialer Richtung zwischen dem ersten Ende 11a₁ und dem zweiten Ende 11a₂. Die Lenkausnehmung 11a ist vorzugsweise rotationssymmetrisch zur Lenkachse 6 angeordnet. Am ersten Ende 11a₁ der Lenkausnehmung 11a ist ein erster Lagersitz 14c zur Aufnahme einer ersten Lagereinrichtung eines Steuersatzes und am zweiten Ende 11a₂ der Lenkausnehmung 11 a ist ein zweiter Ladersitz 14d zur Aufnahme einer zweiten Lagereinrichtung des Steuersatzes angeordnet. Mittels des Steuersatzes ist die Fahrradgabel (nicht dargestellt) gegenüber dem Fahrradrahmen 11 drehbar gelagert. Das Einbaumaß 17₁ gibt den Einbauraum, in axialer Richtung innerhalb der Lagersitze 14c/14d, an. Das Einbaumaß 17₂ gibt den Einbauraum, in axialer Richtung innerhalb des ersten und zweiten axialen Endes 11a, und 11a₂ des Steuerrohres 11b an. Die Positionen 16a und 16b geben zwei bevorzugte Positionen zum Anordnen der Einrichtung zum Begrenzen des Lenkeinschlagwinkels an, dabei befinden sich beide Positionen innerhalb des Einbauraums 17₁. Weiter bevorzugt kann sowohl an der Position 16a und an der Position 16b eine derartige Einrichtung angeordnet sein, somit kann eine besonders stabile Einrichtung zum Begrenzen des Lenkeinschlagwinkels erreicht werden.

**Bezugszeichenliste**

| | |
|---|---|
| 1 | Anschlags-Gegeneinrichtung |
| 2₁ | Erstes Dämpfungsbauteil |
| 2₂ | Zweites Dämpfungsbauteil |
| 2a₁ | Erster Dämpfungsabschnitt |
| 2b₁ | Erster Halteabschnitt |
| 2c₁ | Erste Anschlags-Gegenfläche |
| 2a₂ | Zweiter Dämpfungsabschnitt |
| 2b₂ | Zweiter Halteabschnitt |
| 2c₂ | Zweite Anschlags-Gegenfläche |
| 2d | Verbindungsbereich |
| 3b₁ | Erster Vorsprung der Lenkanschlagseinrichtung |
| 3c₁ | Erste Lenkanschlagsfläche |
| 3b₂ | Zweiter Vorsprung der Lenkanschlagseinrichtung |
| 3c₂ | Zweite Lenkanschlagsfläche |
| 3d | Ausnehmung für eine Schraubeinrichtung |
| 4 | Ausnehmung |
| 4a | Spaltmaß |
| 5 | Lenkanschlagseinrichtung zur Befestigung an der Radführungseinrichtung |
| 6 | Lenkachse |
| 7 | Erste Bewegungsrichtung |
| 7₂ | Zweite Bewegungsrichtung |
| 8 | Schraubeinrichtung |
| 8a | Schraubachse |
| 9 | Innenfläche |
| 10 | Außenfläche |
| 11 | Fahrradrahmen |
| 11a | Lenkausnehmung |
| 11a₁ | Erstes axiales Ende der Lenkausnehmung |
| 11a₂ | Zweites axiales Ende der Lenkausnehmung |
| 11b | Steuerrohr |
| 11b₁ | Steuerrohrwandung |
| 12 | Lenkstange, Fahrradlenker |
| 12a | Vorbau |
| 13 | Radführungseinrichtung |
| 14a | Erste Lagereinrichtung |
| 14a₁ | Erster Lagersitz |
| 14b | Zweite Lagereinrichtung |
| 14b₁ | Zweiter Lagersitz |
| 15 | Gelenkte Radeinrichtung |
| 16a | Erste Position zur Anordnung einer erfindungsgemäßen Einrichtung |
| 16b | Zweite Position zur Anordnung einer erfindungsgemäßen Einrichtung |
| 17₁ | Einbauraum axial innerhalb zwischen erstem/zweiten Lagersitz |
| 17₂ | Einbauraum axial innerhalb zwischen erstem/zweite Ende des Steuerrohrs |
| 18 | Richtung für tiefe Position des Lenkers 12 |

## Patentansprüche

1. Einrichtung zum Begrenzen des Lenkeinschlagwinkels einer Lenkeinrichtung an einem Fahrrad zwischen einer ersten und einer zweiten Endposition, wobei dieses Fahrrad eine Radführungseinrichtung (13), insbesondere eine Fahrradgabel mit ein oder zwei Gabelscheiden, und einen Fahrradrahmen (11) aufweist,
wobei diese Radführungseinrichtung (13) um eine Lenkachse (6) drehbar in einem Steuerrohr (11 b) dieses Fahrradrahmens (11) gelagert ist, wobei an der Radführungseinrichtung (13) eine Lenkanschlagseinrichtung (5) mit einer ersten und einer zweiten Lenkanschlagsfläche (3c₁, 3c₂) angeordnet ist,
wobei an diesem Fahrradrahmen (11) eine Anschlags-Gegeneinrichtung (1) mit einer ersten und einer zweiten Anschlags-Gegenfläche (2c₁, 2c₂) angeordnet ist und
wobei in dieser ersten Endposition diese erste Lenkanschlagsfläche (3c₁) diese erste Anschlags-Gegenfläche (2c₁) kontaktiert und in dieser zweiten Endposition diese zweite Lenkanschlagsfläche (3c₂) diese zweite Anschlags-Gegenfläche (2c₂) kontaktiert,
wobei diese erste und diese zweite Lenkanschlagsfläche (3c₁, 3c₂) radial und axial wenigstens teilweise innerhalb dieses Steuerrohres (11 b) angeordnet sind.

2. Einrichtung gemäß Anspruch 1, **dadurch gekennzeichnet, dass** diese erste und diese zweite Lenkanschlagsfläche (3c₁, 3c₂) sowohl radial als auch axial vollständig innerhalb dieses Steuerrohres (11 b) angeordnet sind.

3. Einrichtung gemäß einem der vorhergehenden Ansprüche, **dadurch gekennzeichnet, dass** diese Lenkanschlagseinrichtung (5) radial und axial im Wesentlichen vollständig innerhalb dieses Steuerrohres (11 b) angeordnet ist.

4. Einrichtung gemäß einem der vorhergehenden Ansprüche, **dadurch gekennzeichnet, dass** diese Anschlags-Gegeneinrichtung (1) sowohl radial als auch axial im Wesentlichen vollständig innerhalb dieses Steuerrohres (11 b) angeordnet ist.

5. Einrichtung gemäß mindestens einem der vorhergehenden Ansprüche, **dadurch gekennzeichnet, dass** die Lenkanschlagseinrichtung (5) kraftschlüssig an der Radführungseinrichtung (13) befestigbar ist.

6. Einrichtung gemäß mindestens einem der vorhergehenden Ansprüche, **dadurch gekennzeichnet,**
**dass** diese Radführungseinrichtung (13) mittels wenigstens einer Lagereinrichtung, insbesondere einer Steuerlagereinrichtung, gegenüber diesem Fahrradrahmen (11) gelagert ist,
**dass** wenigstens diese erste oder diese zweite oder alle Anschlags-Gegenflächen (2c₁, 2c₂) an dieser Lagereinrichtung angeordnet sind.

7. Einrichtung gemäß Anspruch 6, **dadurch gekennzeichnet,**
**dass** diese Lagereinrichtung (14a, 14b) einen ersten Werkstoff aufweist oder wenigstens teilweise aus diesem ersten Werkstoff besteht und dass ein Dämpfungsbauteil (2₁, 2₂), welches wenigstens eine dieser Anschlags-Gegenflächen (2c₁, 2c₂) aufweist einen zweiten, von diesem ersten Werkstoff verschiedenen, Werkstoff aufweist oder aus diesem besteht und
**dass** dieser zweite Werkstoffe gegenüber diesem ersten Werkstoff einen geringen Elastizitätsmodul aufweist.

8. Einrichtung gemäß Anspruch 7, **dadurch gekennzeichnet, dass** der Werkstoff des Dämpfungsbauteils (2₁, 2₂) einen Elastizitätsmodul aufweist welcher größer ist als vorzugsweise 2*10³ N/mm², bevorzugt größer als 3* 10³ N/mm² und besonders bevorzugt größer als 4*10³ N/mm² und weiter ist
dieser Elastizitätsmodul kleiner als vorzugsweise 70*10³ N/mm², bevorzugt kleiner als 40*10³ N/mm² und besonders bevorzugt kleiner als 10*10³ N/mm² und
ganz besonders bevorzugt ist dieser Elastizitätsmodul im Wesentlichen etwa 5*10³ N/mm².

9. Einrichtung gemäß einem der Ansprüche 7 oder 8, **dadurch gekennzeichnet, dass** dieser zweite Werkstoff aus einer Gruppe von Werkstoffen ausgewählt ist, welche wenigstens folgende Werkstoffe aufweist:
- natürlicher oder künstlicher Kautschuk,
- Gummi,
- Acrylnitril-Butadien-Styrol-Copolymerisat (ABS-Kunststoff),
- Polypropylen (PP),
- Polyethylen (PE),
- Faserverstärkter Kunststoff
oder dergleichen.

10. Einrichtung gemäß einem der Ansprüche 7 bis 9, **dadurch gekennzeichnet, dass**
dieses Dämpfungsbauteil (2₁, 2₂) vorzugsweise kraftschlüssig bevorzugt stoffschlüssig oder besonders bevorzugt formschlüssig mit dieser Lagereinrichtung (14a, 14b) verbunden ist oder
weiter vorzugsweise mittels einer Kombination aus wenigstens zwei der genannten Verbindungsarten.

11. Fahrrad mit einer Einrichtung gemäß einem der Ansprüche 1 bis 10.

12. Verfahren zum Montieren einer Einrichtung zum Begrenzen des Lenkeinschlags gemäß mindestens einem der vorhergehenden Ansprüche, **dadurch gekennzeichnet, dass** dieses Verfahren wenigstens die Schritte aufweist,
- Anbringen der Lenkanschlagseinrichtung (5) an der Radführungseinrichtung (13),
- Anbringen der Gegenanschlagsfläche (2c₁, 2c₂) an der Fahrzeug-Rahmeneinrichtung (11),
- Einsetzten der Radführungseinrichtung (13) in die Fahrzeug-Rahmeneinrichtung (11),
- Ausrichten der Lenkanschlagseinrichtung (5).

13. Verfahren gemäß Anspruch 12, **dadurch gekennzeichnet, dass** die Lenkanschlagseinrichtung (5) an der Radführungseinrichtung (13) angebracht wird, bevor die Radführungseinrichtung (13) in diesen Fahrradrahmen (11) eingesetzt wird.

14. Verfahren gemäß einem der Ansprüche 12, 13, **dadurch gekennzeichnet, dass** diejenige Einrichtung, welche die Gegen-Anschlagsfläche (2c₁, 2c₂) aufweist, an der Fahrzeug-Rahmeneinrichtung (11) angebracht wird, bevor die Radführeinrichtung (13) in den Fahrradrahmen (11) eingesetzt wird.
